(19) Europäisches Patentamt / European Patent Office / Office européen des brevets

(11) **EP 1 939 736 A2**

(12) **EUROPEAN PATENT APPLICATION**

(43) Date of publication:
**02.07.2008 Bulletin 2008/27**

(51) Int Cl.:
***G06F 9/46*** (2006.01)

(21) Application number: **07024127.8**

(22) Date of filing: **12.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **15.12.2006 JP 2006338887**

(71) Applicant: **Hitachi, Ltd.**
**Chiyoda-ku**
**Tokyo 100-8280 (JP)**

(72) Inventor: **Tanaka, Hiroshi**
**Takuba-shi**
**Ibaraki 305-0821 (JP)**

(74) Representative: **Strehl Schübel-Hopf & Partner**
**Maximilianstrasse 54**
**80538 München (DE)**

(54) **Data processing system and semiconductor integrated circuit**

(57)    A semiconductor integrated circuit and data processing system using the same which can reduce the overhead required in access to the local memory accompanying task switching to a processor, wherein first processors to which assignment of a task are controlled by a second processor includes a buffer memory as a local memory for instruction and a data memory as a local memory for data. The second processor determines a task to be executed next, by judging the cost calculated in consideration of the exchange overhead of information in the local memory for the task executed immediately before and a candidate task to be executed next. According to this, in task switching, switching to a task with less cost of task switching is prioritized, enabling to shorten the total processing time.

**FIG.1**

## Description

CLAIM OF PRIORITY

The present application claims priority from Japanese application JP 2006-338887 filed on December 15, 2006 the content of which is hereby incorporated by reference into this application.

FIELD OF THE INVENTION

The present invention relates to task assignment control to plural processors mounted in a data processing system or a semiconductor integrated circuit, more specifically, to an art which is effective when applied to a semiconductor integrated circuit which controls, for example, a setup of logical function to a dynamically reconfigurable processor with a variably controllable logical function, and assignment of a task using the set-up logical function.

BACKGROUND OF THE INVENTION

In recent years, plural processors have come to be mounted in one semiconductor chip with the spread of information management systems and the increasing demand for high-performance and excellent functioning of the information management systems. These chips can exercise high performance even at low frequency by assigning processing to the plural processors. In recent years, circuit structure which can be realized by a semiconductor chip is expanding with progress of a semiconductor manufacturing technology, and a semiconductor chip which uses plural processors effectively has appeared. In these semiconductor chips, especially in a heterogeneous multiprocessor chip which mounts several different processors, there is a method in which a core serving as a master distributes and controls processing to other cores, or a method in which each core operates independently. In these methods, effective use of the mounted processors is required.

As one of countermeasures to such a problem, a task assignment art for performing efficient processing to a multiprocessor system is disclosed in Patent Document 1. In Patent Document 1, a method of assigning a task according to the feature of a processor is presented. [Patent Document 1] Japanese Unexamined Patent Publication No. 2004-171234

SUMMARY OF THE INVENTION

However, the art disclosed by Patent Document 1 does not take into consideration management of a local memory in the processor for built-in use, which the present inventor examines. The present inventor has examined, for example, the setup of the logical function to the dynamically reconfigurable processor of which the logical function can be controlled variably, and the assignment control of the task utilizing the set-up logical function. The dynamically reconfigurable processor possesses an arithmetic circuit, the logical function of which is determined upon receiving logical configuration information stored in a buffer memory. The dynamically reconfigurable processor additionally possesses, as a local memory, a data memory coupled to the arithmetic circuit concerned and the buffer memory. The local memory means a memory of which data transfer to and from the exteriors of the dynamically reconfigurable processor is controlled by an external processor or the like. Consequently, in case that the task of the dynamically reconfigurable processor is changed, the exchange of logical configuration information and data to the local memory becomes an overhead of data processing.

In the art disclosed by Patent Document 1, it is supposed that the improvement in a processing efficiency by the instruction set of a processor is assumed, however, the art does not take into consideration in particular the efficient task management considering the use of the above-described local memory which is used for improving performance in the built-in-use processor. When there is no consideration on efficient task management as architecture of a processor itself, it is necessary to take into consideration the management of the local memory and even the accompanying overhead by program itself which a user creates. As a result, the program itself and processing by it become complicated; consequently, the overhead of data processing cannot be made small. Since a processor which performs more diversified processing will be mounted corresponding to a future realization of a built-in device which is of high-performance and advanced functioning, it is supposed that the above-mentioned problem will become much more significant.

One purpose of the present invention is to provide a data processing system which can reduce overhead in required access to a local memory due to the switching of a task in a mounted processor.

Another purpose of the present invention is to provide a semiconductor integrated circuit which can reduce overhead required in access to a local memory due to the switching of a task in an on-chip processor.

The purpose described above and other purposes and new features of the present invention will become clear from the description and the accompanying drawings of the present specification.

The following briefly explains an outline of typical one of the inventions disclosed by the present application.

That is, in a data processing system or a semiconductor integrated circuit including plural processors mounted therein, a first processor (DRP1, DRP2) to which assignment of a task is controlled by a second processor (SPU) includes a buffer memory (CFGBUF) serving as a local memory for instruction and a data memory (LMA) serving as a local memory for data. The second processor calculates cost in consideration of overhead in exchanging information in the local memory from a task performed immediately before to a candidate task to be performed next by the first processor, and determines a task to be performed next by the first processor by judging the calculated cost. According to the scheme, in task switching, the switching to a task with less cost in the task switching is given priority, and it becomes possible to shorten the total processing time.

The effect of the typical one of the inventions disclosed by the present application is simply explained as follows.

That is, the overhead required in access to the local memory due to the switching of a task in the mounted processor can be reduced.

BRIEF DESCRIPTION OF THE DRAWINGS

Embodiments of the present invention will be described in detail based on the following figures, wherein

Fig. 1 is a block diagram illustrating the constitution of a microcomputer as an example of a semiconductor integrated circuit concerning the present invention;

Fig. 2 is a block diagram illustrating the constitution of a dynamically reconfigurable processor included in the microcomputer concerning the present invention;

Fig. 3 is an explanatory drawing illustrating a hierarchy of configuration of the dynamically reconfigurable processor;

Fig. 4 is an explanatory drawing illustrating a hierarchy constitution of software in the microcomputer;

Fig. 5 is a conceptual diagram illustrating the configuration of the dynamically reconfigurable processor and the constitution of tasks;

Fig. 6 is an explanatory drawing illustrating management information of a task to be assigned to the dynamically reconfigurable processor;

Fig. 7 is an explanatory drawing illustrating local memory management information utilized by a task to be assigned to the dynamically reconfigurable processor;

Fig. 8 is a flow chart illustrating the switching decision processing of a task to be assigned to the dynamically reconfigurable processor;

Fig. 9 is an explanatory drawing of an evaluation table illustrating the cost hierarchy which is used in a second cost calculation method for the switching decision of a task to be assigned to the dynamically reconfigurable processor; and

Fig. 10 is a block diagram illustrating another example of a microcomputer concerning the present invention.

DETAILED DESCRIPTION OF THE PREFERRED EMBODIMENTS

1. Typical Embodiment

First, an outline is explained about a typical embodiment of the invention disclosed in the present application. The reference mark of the drawing which is referred to in parentheses in explaining the outline of the typical embodiment only illustrates what is included in the concept of a component to which the reference mark is attached.

[1] A data processing system concerning the typical embodiment of the present invention possesses a first processor (DRP1, DRP2) of which a logical function is controlled variably, and a second processor (SPU) which controls assignment of a task to the first processor. The first processor possesses: a buffer memory (CFGBUF) which stores logical configuration information received from the second processor; an arithmetic circuit (RCA) of which a logical function is determined upon receiving the logical configuration information stored in the buffer memory; a data memory (LMA) coupled to the arithmetic circuit; and a control circuit (CFGM) which responds to a direction from the second processor and controls internal transfer of the logical configuration information from the buffer memory to the arithmetic circuit and internal transfer of data between the arithmetic circuit and the data memory. When the first processor switches a task to process, the second processor performs cost calculation in consideration of amount of a transfer time of the logical configuration information and a transfer time of data for switching the logical function, to a task as a switching candidate possessing the same priority, and determines a task to be performed next based on the calculation result.

According to the above, since the switching to a task which possesses less cost in exchanging the logical configuration information and data of the first processor in the task switching is given priority, the overhead of required access to the buffer memory and the data memory due to the task switching of the first processor can be reduced, thereby enabling it to shorten total data processing time.

As one concrete aspect, the cost calculation considers the amount of the transfer time with the sum total of the exchange capacity of the buffer memory and the exchange capacity of the data memory. Since the exchange capacity is calculated in advance, the amount of the transfer time can be judged comparatively correctly.

As another concrete aspect, the cost calculation considers the amount of the transfer time according to the kind of information which is a target to be exchanged in the buffer memory and the data memory. For example, when task switching takes place, there is a case where only the logical configuration information corresponding to the task concerned is necessary to be transferred from the buffer memory to the arithmetic circuit, or a case where the logical configuration information corresponding to plural tasks must be transferred from the exterior to the buffer memory via the access control of the second processor, or a case where a data transfer must be performed between the data memory and the exterior via the access control of the second processor. These cases are classified by the kind of information which is a target to be exchanged, and the cost calculation is performed. Since the calculation of the exchange capacity as described above is not required, the cost calculation time can be shortened. However, the decision precision of the amount of the transfer time becomes poorer than in the above method.

As another concrete aspect, the second processor possesses a storage area of task management information (TMF) which manages the task to be processed by the first processor. The task management information includes, for every task, task identification information (TID), identification information (TGTDRP) of the first processor assigned to process the task concerned, and the task execution priority (TSKPRI) of the task concerned.

As a more concrete aspect, the second processor possesses a storage area of area management information (LMMF) for managing the data memory by dividing the data memory into plural areas. The area management information includes the following information for every area which a task managed by the task management information uses: that is, task identification information (TID), identification information (AID) of one area which the task concerned uses, data saving address information (BUFADR), information (LMST) indicative of the location of data assigned to the area indicated by the identification information, and information (LMDINFO) indicative of a utilization object of the area indicated by the identification information. When task switching takes place, it is easy to perform the management of the data memory by the second processor, i.e., the management of saving of the calculation result data to the data memory and loading of the data used for calculation.

As a more concrete aspect, in case that when switching a task, the information indicative of the location included in the area management information of a task-to-be-switched-off means the data memory, and that a task-to-be-switched-on uses the same area of the data memory, the second processor sets the area specified by the area management information concerned as the target of the cost calculation. The data of the other location can be easily excluded from the cost calculation.

As a furthermore concrete aspect, when the information indicative of the location means the data memory or the saving place of the exterior of the first processor, and when the information indicative of the location of a task-to-be-switched-on indicates the saving place, the area specified by the area management information including the information indicative of the location concerned is rendered as the object of the cost calculation. The cost of saving data for the purpose that the task-to-be-switched-on may use the data memory which the task-to-be-switched-off uses, and the cost of loading data of the task-to-be-switched-on from the saving place where the data exists to the data memory are included in the object of cost calculation.

As another concrete aspect, in case that when switching a task, the information indicative of the utilization purpose included in the area management information of the task indicates that exchange of data is necessary, the second processor sets the area specified by the area management information concerned as the object of cost calculation. The data of the other purpose can be easily excluded from the cost calculation.

As a more concrete aspect, the information indicative of the utilization object indicates one of an output buffer, an input buffer, a constant data storage area, and the area that stores an intermediate result of processing by the task. At this time, in case that the information indicative of the utilization object indicates the output buffer when switching a task at the end of the task, the second processor saves information on the area specified by the area management information of the task concerned. In case that the information indicative of the utilization object indicates the area which stores the intermediate result when switching a task at processing interruption of the task, the second processor saves information on the area specified by the area management information of the task concerned. Control of whether to save the data of an area or not becomes easy.

As another concrete aspect, the data processing system concerning the typical embodiment of the present invention possesses further plural pieces of the first processors, and plural third processors (PE1, PE2) which issue a data processing request to the second processor, and an external memory (EXMEM) . The second processor controls assignment of a task to the first processors in response to the data processing request issued by the third processors, and performs an access control for data transfer between the buffer memory and the data memory and data transfer between the buffer memory and the external memory. By separating the functions of the second processor and the third processors, the data processing efficiency as the whole system improves. Although it is possible to make one of the third processors bear the function of the second processor, the third processor concerned must spare the throughput as much as the part, hence it is considered that the third processor concerned may deteriorate the original data processing efficiency thereof.

[2] The semiconductor integrated circuit (MCU) concerning the typical embodiment of the present invention possesses, on one semiconductor substrate: plural first processors (DRP1, DRP2) of which a logical function is controlled variably; a second processor (SPU) which controls the first processors; and plural third processors (PE1, PE2) which issue a data processing request to the second processor. The first processor possesses: a buffer memory (CFGBUF) which stores logical configuration information received from the second processor; an arithmetic circuit (RCA) of which a logical function is determined upon receiving the logical configuration information stored in the buffer memory; a data memory (LMA) coupled to the arithmetic circuit; and a control circuit (CFGM) which, in response to a direction from the second processor, controls internal transfer of the logical configuration information from the buffer memory to the arithmetic circuit and internal transfer of data between the arithmetic circuit and the data memory. The second processor controls assignment of a task to the first processor in response to the data processing request issued by the third processor, and when the first processor switches a task to process, the second processor performs cost calculation in consideration of amount of a transfer time of the logical configuration information and a transfer time of data for switching the logical function to a task as a switching candidate possessing the same priority, and determines a task to be performed next based on the calculation result.

According to the above, since switching to a task of less cost required for exchange of the logical configuration information and data of the first processor is given higher priority in switching a task, the overhead of required access to the buffer memory and the data memory due to the task switching of the first processor can be reduced, thereby enabling it to shorten total data processing time. Since the functions of the second processor and the third processors are separated, the data processing efficiency as the whole system improves further.

As one concrete aspect, the first processors, the second processor, and the third processors are commonly coupled to an internal bus (IBUS). The bus arrangement is simplified.

As another concrete aspect, the first processors and the second processor are commonly coupled to the first internal bus (IBUS2), the third processors are coupled to the second internal bus (IBUS1), and the semiconductor integrated circuit possesses a bridge circuit which couples the first internal bus and the second internal bus. By the separation of the bus, avoidance of conflict of the bus becomes easy between the data processing by the first processors and the second processor, and the data processing by the third processors.

[3] A data processing system by another viewpoint of the present invention possesses a first processor (DRP1, DRP2) and a second processor (SPU) which controls assignment of a task to the first processor. The first processor possesses: an arithmetic circuit (RCA); a local memory (CFGBUF, LMA) which stores information received from the second processor and the operation result by the arithmetic circuit; and a control circuit (CFGM) which controls internal transfer of information between the local memory and the arithmetic circuit in response to a direction from the second processor. When the first processor switches a task to process, the second processor performs cost calculation in consideration of amount of required transfer time of information to a task of the same priority used as a switching candidate, and determines a task to be performed next based on the calculation result. According to the above, since switching to a task of less cost required for exchange of the information on the local memory of the first processor is given higher priority in switching a task, the overhead of required access to the local memory due to the task switching of the first processor can be reduced, thereby enabling it to shorten total data processing time.

As one concrete aspect, the cost calculation considers the amount of the transfer time in terms of the exchange capacity of the buffer memory. As another aspect, the cost calculation considers the amount of the transfer time in terms of a kind of target information as exchange target to the buffer memory.

2. Explanation of Embodiment

Next, an embodiment is explained further in full detail.

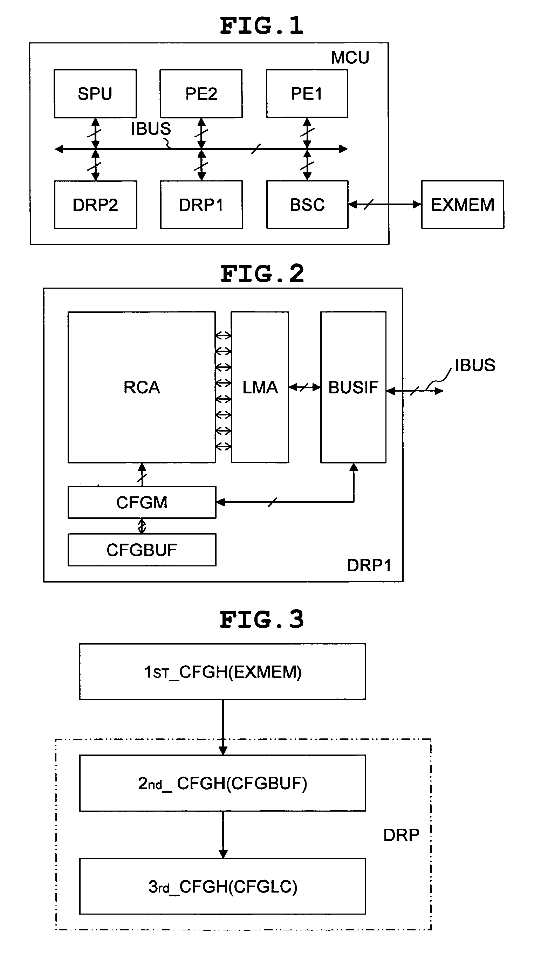

An example of the data processing system according to the present invention is shown in Fig. 1. A microcomputer MCU and an external memory EXMEM are typically shown in the figure.

The microcomputer MCU, although not restricted in particular, includes two processors PE1, PE2, two dynamically reconfigurable processors DRP1, DRP2, a sub-processors SPU for DRP management, a bus state controller BSC, and an inter-processor bus IBUS. The external memory EXMEM is coupled to the bus state controller BSC. In addition, other circuit modules, such as a direct memory access controller, may be coupled to the inter-processor bus IBUS. The microcomputer MCU is formed in one semiconductor chip like a single crystal silicon, for example.

The processors PE1, PE2 are general-purpose processors, and perform necessary data processing by executing instructions according to a program. The processor PE1 and the processor PE2 may be constituted mutually same or may be constituted differently. The external memory EXMEM is arranged in the address space of the processor PE1 and the processor PE2, and the processor PE1 and the processor PE2 can access the external memory EXMEM.

The dynamically reconfigurable processors DRP1, DRP2 are processors of which the arithmetic processing function is enabled to dynamically change based on control information, and they are used as an accelerator which mainly performs specific processing at high speed by the request from the processor PE1 or the processor PE2. Dynamically reconfigurable processors DRP1, DRP2 are used for compression/decompression processing of image data, encryption/decryption processing, or baseband processing. Although not restricted in particular, the dynamically reconfigurable processors DRP1, DRP2 are mutually provided with the same constitution. Details of these dynamically reconfigurable processors DRP1, DRP2 will be given later in the explanation thereof based on Fig. 2. Here the outline of the dynamically reconfigurable processors DRP1, DRP2 is described. The dynamically reconfigurable processors DRP1, DRP2 are characterized by having a local memory for instructions and for data. The dynamically reconfigurable processors DRP1, DRP2 are initialized based on the instructions mainly from the processor PE1 or the processor PE2, and after the initialization, perform data processing automatically according to the instructions. The dynamically reconfigurable processors DRP1, DRP2 do not have a means to directly access a memory module arranged in the exterior thereof, for example, the external memory EXMEM. The dynamically reconfigurable processors DRP1, DRP2 are provided with a local memory for instructions and for data which is used for calculation, and are positioned as an example of a processor with the feature of not having a means to directly access the memory module arranged in the external of the dynamically reconfigurable processors. However, neither the interrupt request to the processors PE1, PE2 nor the request of direct memory access may be included in the concept of access to the memory module, but the processor like the dynamically reconfigurable processors may be equipped with a means to perform these requests.

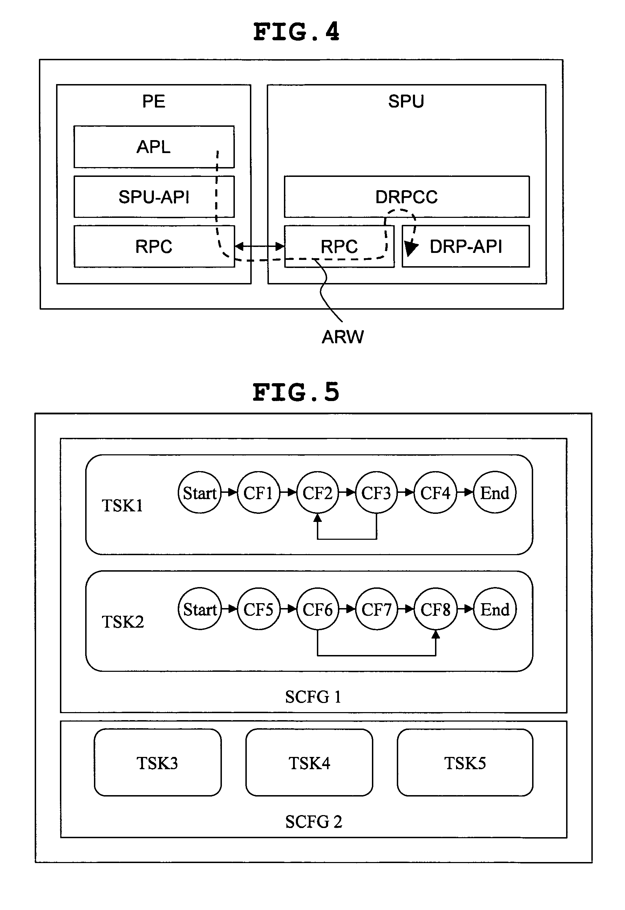

A sub-processor SPU is a processor for managing the dynamically reconfigurable processors DRP1, DRP2. The sub-processor SPU receives a processing request from the processors PE1, PE2 to the dynamically reconfigurable processors DRP1, DRP2, and assigns processing to the dynamically reconfigurable processors DRP1, DRP2 according to the internal situation thereof. In this case, the instruction and data in the local memory of the dynamically reconfigurable processors DRP1, DRP2 are exchanged if needed. A direct memory access controller is often used in the exchange of the instruction and data in the local memory. In the present example, however, the sub-processor SPU is assumed to be provided with the equivalent function therein. Here, although not shown, the microcomputer MCU may be provided with the direct memory access controller separately from the sub-processor SPU. The processing by the sub-processor SPU will be described in detail in Fig. 4 and the subsequent figures. Instead of providing with the sub-processor SPU, the processing which is otherwise assigned to the sub-processor SPU may be constituted as one task to be processed by the other processor PE1 or PE2.

The inter-processor bus IBUS is a general bus to which the processors PE1, PE2, the sub-processor SPU, the dynamically reconfigurable processors DRP1, DRP2, and the bus state controller BSC are coupled. Although one inter-processor bus IBUS is employed here to couple these circuit modules, the constitution of the bus is not limited to the present case but the constitution in which plural buses are coupled by a bridge circuit may be adopted.

The bus state controller BSC is a circuit for coupling the inter-processor bus IBUS and an external module of the microcomputer MCU, for example, the external memory EXMEM, and performs conversion of a bus protocol, timing adjustment for different operation clocks, etc.

Fig. 2 illustrates a constitution of the dynamically reconfigurable processor DRP1. Although not shown, the dynamically reconfigurable processor DRP2 is constituted same as in Fig. 2.

The dynamically reconfigurable processor DRP1 shown in Fig. 2 includes: a reconfigurable cell array RCA reconfigured by the configuration information; a local memory LMA for storing data; a configuration manager CFGM; a configuration buffer CFGBUF equivalent to the local memory for storing instructions; and a bus interface BUSIF. The bus interface BUSIF is coupled to the inter-processor bus IBUS.

Here, the term "configuration" means an instruction in the dynamically reconfigurable processor DRP1. Data processing can be performed to the data of the local memory LMA by switching the configuration.

The reconfigurable cell array RCA is provided with plural arithmetic cells arranged in array, and the plural arithmetic cells are coupled with a signal line, thereby forming a data-flow type arithmetic unit for example. The reconfigurable cell array RCA is coupled to the local memory LMA and the configuration manager CFGM. The arithmetic cells inside the reconfigurable cell array RCA may be of single kind or of plural kinds. Each arithmetic cell is equipped therein with a circuit storing the configuration at the time of execution (a configuration storing circuit of the arithmetic cell). The configuration is automatically loaded from the configuration buffer CFGBUF to the storing circuit by the configuration manager CFGM. The configuration is switched by the instruction of the configuration manager CFGM, and the reconfigurable cell array RCA inputs the data of the local memory LMA, performs data processing, and stores a data processing result in the local memory LMA again. The configuration storing circuit of the arithmetic cell may be in units of one configuration, or may be in units of plural configurations. The configuration storing circuit is, in many cases, composed of a smaller size, for example, in units of two to four configurations, from the view point of occupying area or working speed. The hierarchical treatment of the configuration will be described in detail with reference to Fig. 3.

The local memory LMA for data is a memory for storing the input data used for operation by the reconfigurable cell array RCA, and the output data of the result of the operation. The local memory LMA may be used for storing the intermediate result of the operation in the reconfigurable cell array RCA. The data transfer between the local memory LMA and the external memory EXMEM of the dynamically reconfigurable processor DRP1 is controlled by the sub-processor SPU.

The configuration buffer CFGBUF is a memory for storing the configuration which describes the operation of the dynamically reconfigurable processor DRP1. Although the capacity and constitution of the configuration buffer CFGBUF change with the concrete constitution of the dynamically reconfigurable processor DPR1, the configuration buffer CFGBUF includes instructions to the arithmetic cell inside the reconfigurable cell array RCA and instructions to direct the operation of the configuration manager CFGM which manages the reconfigurable cell array RCA. The configuration buffer CFGBUF can store many configurations. The data transfer between the configuration buffer CFGBUF and the external memory EXMEM of the dynamically reconfigurable processor DRP1 is controlled by the sub-processor SPU.

The configuration manager CFGM manages switching of the configuration performed by the reconfigurable cell array RCA, and transfer of the configuration from the configuration buffer CFGBUF to the arithmetic cell in the reconfigurable cell array RCA, following the instruction of the configuration manager CFGM stored in the configuration buffer CFGBUF. The configuration manager CFGM starts processing by the request from the sub-processor SPU, and notifies the end of the processing to the sub-processor SPU by interruption at the time of the processing end. In the present end procedure, not performing the notice by the interruption, the sub-processor SPU may instead supervise the state of the configuration manager CFGM and detect the end.

In the dynamically reconfigurable processor DRP1 composed as mentioned above, it is possible to perform data processing automatically to the data stored in the local memory LMA according to a setup from the sub-processor SPU and the given configuration.

Fig. 3 shows an example of the hierarchy structure of the storage area of the configuration for the dynamically reconfigurable processor DRP. In the present example, the storage area of the configuration possesses three hierarchies. A first storage hierarchy of configuration (first configuration storage hierarchy) 1st_CFGH is a shared memory represented by the external memory EXMEM. When the microcomputer MCU is provided with an on-chip shared memory, it is also possible to use the shared memory as a storage area of the first configuration storage hierarchy. In the first configuration storage hierarchy, the configuration is treated in units of a section configuration SCFG. The section configuration SCFG is a unit of the configuration which is possible to be stored in block in the configuration buffer CFGBUF. Plural section configurations SCFG are treated in the first configuration storage hierarchy.

A second storage hierarchy of configuration (second configuration storage hierarchy) 2nd_CFGH is a configuration buffer CFGBUF which is provided by the dynamically reconfigurable processors DRP1, DRP2. The configuration buffer CFGBUF stores a section configuration SCFG. When plural configuration buffers CFGBUF are provided, it is possible to store plural section configurations SCFG. Since the section configuration SCFG is composed of many configurations, the dynamically reconfigurable processors DRP1, DRP2 can perform data processing continuously to a certain amount of contents of processing, without replacing the section configuration SCFG in the configuration buffer CFGBUF.

A third storage hierarchy of configuration (third configuration storage hierarchy) 3rd_CFGH is a small-scale configuration storing circuit CFGLC which is provided by each arithmetic cell of the reconfigurable cell array RCA inside the dynamically reconfigurable processors DRP1, DRP2.

The transfer from the first configuration storage hierarchy 1st_CFGH to the second configuration storage hierarchy 2nd_CFGH is controlled by the sub-processor SPU. When this transfer is performed, the sub-processor SPU needs to grasp a processing situation so that the dynamically reconfigurable processors DRP1, DRP2 may not stop unintentionally the processing in execution. Since this transfer is performed using the inter-processor bus IBUS, the transfer suffers the influence according to the situation of the bus access by other circuit modules, and takes a comparatively long transfer time.

The transfer from the second configuration storage hierarchy 2nd_CFGH to the third configuration storage hierarchy 3rd_CFGH is controlled by the configuration manager CFGM in the dynamically reconfigurable processors DRP1, DRP2. The time required for this transfer changes with the number of the arithmetic cells of the reconfigurable cell array RCA and the structure of connection between the configuration manager CFGM and the reconfigurable cell array RCA. However, since the transfer is performed inside of each of the dynamically reconfigurable processors DRP1, DRP2, the transfer time is comparatively short, and it is also possible to estimate the transfer time correctly.

When the configuration is treated by hierarchization as described above, it is possible to shorten the processing time accompanying the transfer of the configuration, if data processing in the dynamically reconfigurable processors DRP1, DRP2 is performed so that the transfer frequency from the first configuration storage hierarchy 1st_CFGH to the second configuration storage hierarchy 2nd_CFGH can be suppressed.

Fig. 4 shows an example of the hierarchy structure of software in the microcomputer MCU, and the instruction and data flow indicated by an arrow ARW in the case when application is performed by processors PE1, PE2 and a part of processing is borne by the dynamically reconfigurable processors DRP1, DRP2.

Fig. 4 shows an example of the software configuration of the sub-processor SPU which controls the dynamically reconfigurable processors DRP1, DRP2, and the processors PE1, PE2 which give a processing request to the dynamically reconfigurable processors DRP1, DRP2. The software of the processors PE1, PE2 which give a processing request to the dynamically reconfigurable processors DRP1, DRP2 includes an application program APL, an application program interface SPU-API to the sub-processor, and a remote procedure call RPC. In the present invention, an operating system which operates by the processor PE or the sub-processor SPU is not essential; therefore it is omitted from the description. However, the operating system may exist.

In the application processing which executes application program APL, a processing request is issued to the dynamically reconfigurable processors DRP1, DRP2 or a request of data transfer to the dynamically reconfigurable processors DRP1, DRP2 is issued, using the application program interface SPU-API, if needed.

The application program interface SPU-API receives the request from the application program APL, and conveys the request to the sub-processor SPU using the remote procedure call RPC. Namely, the application program interface SPU-API has a program interface released to the public to the application program APL. From the application program, the request can be conveyed to the sub-processor SUP by calling a function of the application program interface with a suitably specified parameter (argument).

The remote procedure call RPC is a program which specifies the procedure for performing inter-processor communication. This remote procedure call RPC can be realized using the existing various communication methods.

The software of the sub-processor SPU, which receives the processing request to the dynamically reconfigurable processors DRP1, DRP2 and controls the dynamically reconfigurable processors DRP1, DRP2, includes a DRP control kernel DRPCC, a remote procedure call RPC, and an application program interface DRP-API to the dynamically reconfigurable processor.

The remote procedure call RPC is the same as the software of the processors PE1, PE2, and it is a program for performing the inter-processor communication.

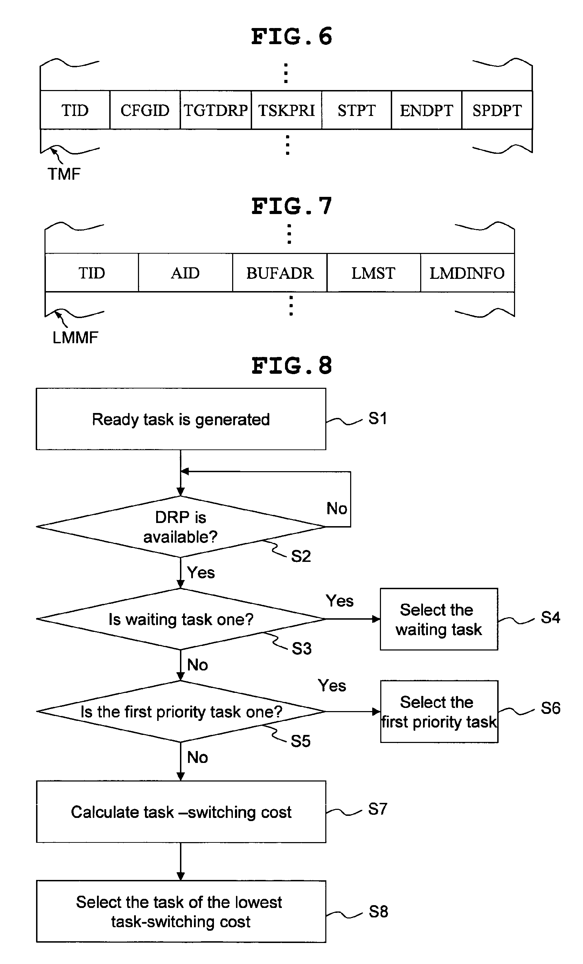

The DRP control kernel DRPCC receives the processing request to the dynamically reconfigurable processors DRP1, DRP2 from the processors PE1, PE2, and controls the dynamically reconfigurable processors DRP1, DRP2, following an internal dynamically reconfigurable processor management method, by the application program interface DRP-API. The object of management performed inside the DRP control kernel DRPCC includes the dynamically reconfigurable processors DRP1, DRP2, the section configuration SCFG of the dynamically reconfigurable processors DRP1, DRP2, a task executed by the dynamically reconfigurable processors DRP1, DRP2, and the local memory LMA and the configuration buffer CFGBUF which are used by the task. The task executed by the dynamically reconfigurable processors DRP1, DRP2 and the pertaining management will be explained in detail with reference to Fig. 5, Fig. 6, and Fig. 8. The local memory which is used by the task will be explained in detail with reference to Fig. 7. The management of the dynamically reconfigurable processors DRP1, DRP2 determines whether the use by the processors PE1, PE2 occupies or shares the dynamically reconfigurable processors DRP1, DRP2. When it is "occupy", a request is received only from a single processor PE1 or PE2, but when it is "share", the request from plural processors PE1, PE2 can be received. The management of the section configuration SCFG of the dynamically reconfigurable processors DRP1, DRP2 manages the registered section configuration SCFG. The management of section configuration SCFG, in one case, stores the section configuration SCFG itself in the sub-processor SPU, and, in another case, stores the section configuration SCFG in the external memory EXMEM and manages the address. In executing a task, when the task is executed by using a section configuration SCFG which is different from the section configuration SCFG currently loaded to the configuration buffer CFGBUF, the desired section configuration SCFG is loaded to the configuration buffer CFGBUF from the external memory EXMEM or the memory concerned in the sub-processor SPU.

The application program interface DRP-API is software for the sub-processor SPU to control directly the dynamically reconfigurable processors DRP1, DRP2. By use of the application program interface DRP-API, access to the register for control according to the structure of the dynamically reconfigurable processors DRP1, DRP2 is performed, a section configuration SCFG is loaded to the configuration buffer CFGBUF in the dynamically reconfigurable processors DRP1, DRP2, or access to the local memory LMA in the dynamically reconfigurable processors DRP1, DRP2 is performed.

In the software configuration shown in Fig. 4, when the dynamically reconfigurable processors DRP1, DRP2 are used from the application program APL executed by the processors PE1, PE2, first, the application program APL issues the utilization request of the dynamically reconfigurable processors DRP1, DRP2 using the application program interface SPU-API. The application program interface SPU-API performs communication between the processors PE1, PE2 and the sub-processor SPU using the remote procedure call RPCRPC, and conveys the request to the DRP control kernel DRPCC. The DRP control kernel DRPCC processes the conveyed request according to the internal management method. In this case, the application program interface DRP-API is used in controlling directly the dynamically reconfigurable processors DRP1, DRP2.

By the constitution described above, it becomes possible to treat processing similarly even when the constitutions of the dynamically reconfigurable processors DRP1, DRP2 are different. Even when there are plural processors PE1, PE2 and plural dynamically reconfigurable processors DRP1, DRP2, performing the above managements by the sub-processor SPU allows easy treatment including conflict etc.

Fig. 5 shows an example of section configurations required for processing of the dynamically reconfigurable processor DRP1. Two section configurations SCFG1, SCFG2 are shown in Fig. 5. The section configuration SCFG1 includes two tasks TSK1, TSK2, and the section configuration SCFG2 includes three tasks TSK3, TSK4, and TSK5. The task TSK1 includes four configurations CF1, CF2, CF3, and CF4, and the task TSK2 includes four configurations CF5, CF6, CF7, and CF8.

Here, a task means a series of processing composed by plural configurations. For example, the task TSK1 includes the configuration CF1, CF2, CF3, and CF4, and the transitions of each configuration are defined as the arrows illustrated in Fig. 5. All of this information is included in the section configuration SCFG1.

In processing according to the section configuration of Fig. 5, for example, when switching of a task takes place from the task TSK1 to the task TSK2, no exchange of the section configuration SCFG is performed, but when switching of a task takes place from the task TSK1 to the task TSK3, exchange from the section configuration SCFG1 to the section configuration SCFG2 is performed. No overhead of exchange will occur if all the tasks can be accommodated in one section configuration SCFG. However, since the size of one section configuration SCFG has an upper limit which is determined by the capacity of the configuration buffer CFGBUF, it must decide the assignment of the section configuration SCFG and the task to the dynamically reconfigurable processors DRP1, DRP2 in consideration of the overhead of task switching. What is necessary is just to load a task from the configuration buffer CFGBUF to the reconfigurable cell array RCA, if there is no exchange of a configuration in the task switching. However, if the exchange of a configuration is necessary, a section configuration must be loaded, for example, from the external memory EXMEM to the configuration buffer CFGBUF.

Fig. 6 shows task management information in the sub-processor SPU for managing a task which the dynamically reconfigurable processors DRP1, DRP2 process. The task management information is required for every task, and the details of one piece of task management information corresponding to one task are exemplified in Fig. 6. The task management information is stored in a storage area TMF of the sub-processor SPU.

The task management information shown in Fig. 6 includes a task number TID which specifies a task, the number of the section configuration (section configuration number) CFGID in which the task is included, the number of the dynamically reconfigurable processor (dynamically reconfigurable processor number) TGTDRP to which the task is assigned, a task execution priority TSKPRI of the task, a task execution start point STPT of the task, a task execution end point ENDPT of the task, and a task execution suspension point SPDPT of the task.

The task number TID is a number for identifying a task. For example, in the example of processing constitution of Fig. 5, TSK1, TSK2, TSK3, TSK4, and TSK5 are the task number TID.

The section configuration number CFGID is a number of a section configuration SCFG containing a task. For example, in the example of processing constitution of Fig. 5, there are SCFG1, SCFG2, and the number of the section configuration CFGID which includes the task of task number TID of TSK1 is SCFG1. This associates the task and the section configuration. This value is set when registering the task which the sub-processor SPU makes the dynamically reconfigurable processor execute according to an application program APL.

The dynamically reconfigurable processor number TGTDRP is a number of the dynamically reconfigurable processor to which a task is assigned, and it is specified to fix the dynamically reconfigurable processor DRP which executes the task. By setting a value indicative of not fixing to the dynamically reconfigurable processor number TGTDRP, the task can be assigned to and executed by any dynamically reconfigurable processor DRP which is available. Similarly this value is set at the time of registration of the task.

The task execution priority TSKPRI is an execution priority of a task. For example, when plural tasks become executable in the sub-processor SPU, a task to be executed is decided using this priority. Detailed selection of an execution task will be explained with reference to Fig. 8.

The task execution start point STPT means the configuration number used as the execution start of a task. For example, in the example of processing constitution of Fig. 5, the task execution start point STPT of the task TSK1 is CF1. In order to make the dynamically reconfigurable processor DRP execute the task, this value is set up as the start point. This value is set at the time of registration of the task.

The task execution end point ENDPT means the configuration number used as the end of execution of a task. For example, in the example of processing constitution of Fig. 5, the task execution end point ENDPT of the task TSK1 is CF4. This value is set at the time of registration of the task. This value is used in order to confirm the end of task by the sub-processor SPU. That is, in the dynamically reconfigurable processor DRP, the sub-processor can confirm the end of task by referring to how far the configuration manager CFGM has executed processing.

The task execution suspension point SPDPT means a configuration when a task is suspended. For example, in the task TSK1 of the example of processing constitution of Fig. 5, when the task is suspended after the completion of execution up to CF2, the execution suspension point SPDPT is CF3. When the task is resumed, the task is resumed from the configuration indicated here by the task execution suspension point SPDPT. At the time of registration of a task, and at the end of task, this value is set as a value meaning to be invalid. In short, the task execution suspension point SPDPT is used as a temporary area where, when the execution of a task is suspended, the number of the configuration corresponding to the suspension is set.

When the sub-processor SPU assigns a task to the dynamically reconfigurable processors DRP1, DRP2 according to the execution of an application program by the processors PE1, PE2 as mentioned above, the sub-processor SPU controls the local memory for data LMA as well, in assigning the data area corresponding to the assignment of the task, and in loading and storing the data to the assigned area. That is, the sub-processor SPU performs the management of the local memory for data LMA as well as the management of task assignment.

Fig. 7 shows an example of the details of the information on the local memory management by the sub-processor SPU for managing the local memory LMA used in task processing by the dynamically reconfigurable processor DRP. The local memory management information is stored in a storage area LMMF of the sub-processor SPU.

The local memory management information shown in Fig. 7 includes a task number TID, an area number AID of the local memory, a data saving point memory address BUFADR of the local memory, local memory status LMST, and data information LMINFO of the local memory. One task can have as many pieces of the local memory management information as the number of the areas of the local memory LMA to be used. Fig. 7 shows an example of one piece of the local memory management information corresponding to one local memory area of one task.

The task number TID indicates a value for identifying which task the local memory management information belongs to.

The area number AID of the local memory indicates a value for identifying the area in the local memory LMA to be used. In the dynamically reconfigurable processor DRP of the present example, the local memory LMA is divided into plural areas with the same size, and the area number AID is assigned to each divided area. If the divided area size is, although not restricted especially, too small, the management overhead thereof will increase. Conversely, if the divided area size is too large, the utilization efficiency thereof will worsen. Therefore, it is necessary to decide the divided area size according to the size of the local memory LMA. For example, when the local memory LMA is composed of a memory of 40 k bytes, the local memory LMA is preferably divided into 20 areas, each divided area possessing 2 k bytes.

The data saving memory address BUFADR of the local memory LMA is a saving memory address for copying and saving the data on the local memory LMA when task switching takes place. In the constitution shown in Fig. 1, the external memory EXMEM is used as a saving memory. In the constitution which has an internal memory in a chip, it is possible to shorten the time required to save data by using the internal memory. Before the start of a task, the data which is needed for processing is stored in the address which the data saving memory address BUFADR indicates, and the data is loaded at the time of start of the task.

The local memory status LMST indicates whether the data of an area indicated by the area number AID of a task indicated by the task number TID is on the local memory LMA or it is on the memory indicated by the data saving memory address BUFADR. Data saving is not performed to the data located in the area of the local memory LMA which the task executed does not use, thereby the time necessary in saving data can be reduced. Accordingly, data which is not related to the task currently executed may exist in some area of the local memory LMA. The value of the local memory status LMST can be set at least two kinds of values, the value which indicates that the data of the area indicated by the area number AID of the local memory LMA has been saved to the data saving memory address BUFADR, and the value which indicates that the data concerned exists on the local memory LMA.

The data information LMINFO of the local memory LMA is a value indicative of the attribute associated with the data of an area indicated by the area number AID of a task indicated by the task number TID. As the value of the local memory data information LMINFO, for example, a value which indicates a constant value (a value which does not change with the task execution), a value which indicates an intermediate result of the processing, a value which indicates that the area concerned is used as an input buffer, and a value which indicates that the area concerned is used as an output buffer can be set up. Thereby, when a task switching takes place after the end of a task, it is only necessary to save the area corresponding to the value with which the local memory data information LMINFO indicates the output buffer. At the time of a task start, the data is loaded from the area where the constant, the intermediate result, and the input value are set, and processing is advanced. When processing on the way is suspended, the area used other than for the constant is saved and loaded. By this scheme, the processing of loading and storing of data at the time of the task switching can be lessened.

Fig. 8 illustrates a flow chart of the task switching decision performed when the sub-processor SPU assigns a task to the dynamically reconfigurable processors DRP1, DRP2.

In response to the request from the processors PE1, PE2, a waiting task begins to create a queue in the sub-processor SPU, thereby triggering the start of processing by the present flow chart (S1). First, it is confirmed whether the dynamically reconfigurable processors DRP1, DRP2 as the object which should execute the task, are available (S2). If unavailable, the process advances to the following step S3. When available, the processing of Step S2 is repeated until the use of the dynamically reconfigurable processor DRP1 or DRP2 as the object is completed. The dynamically reconfigurable processor DRP1 or DRP2 which the task wants to use is identified by referring to TGTDRP of the task management information shown in Fig. 6.

In Step S3, the number of the tasks which are in the state of waiting for execution is counted. If there is one waiting task in the queue, the process advances to the following step S4. If there are plural waiting tasks in the queue, the process advances to Step S5. In Step S4, the waiting task concerned is chosen as a next execution task in the dynamically reconfigurable processor specified as an execution object.

In Step S5, with reference to the task execution priority TSKPRI of the task management information shown in Fig. 6 for the waiting tasks, tasks with the first priority are elected and the number of the tasks is counted. When the number is one, the process advances to Step S6, and when the number is plural, the process advances to Step S7. At Step S6, the task with the first priority is chosen out of the waiting tasks as a next execution task in the dynamically reconfigurable processor which is the execution object.

In Step S7, for each of the plural tasks with the first priority, elected at Step S5, the task switching cost when switched from the task executed previously is calculated. The task switching cost is the time accompanying task switching, and it is substantially impossible to predict this time correctly. For this reason, the time shall be evaluated indirectly from the amount of copies of data accompanying the task switching. Based on the calculation result of the task switching cost, the task of the lowest cost is chosen as a next execution task in the dynamically reconfigurable processor which is the execution object. However, when the tasks with the same switching cost exist, a task which has first entered the queue of waiting for execution is chosen by a so-called FIFO (First-In First-Out) method, for example.

As calculation methods of the cost accompanying the task switching, two methods are described below. The cost calculation methods exemplified here are calculation methods in consideration of the transfer to the configuration buffer CFGBUF which is equivalent to the instruction memory of the dynamically reconfigurable processor, and of the saving and loading of the local memory LMA specified by the local memory management information shown in Fig. 7.

The first cost calculation method is a method which calculates directly the capacity of copy of the data accompanying task switching, using the following equation.

Prime cost is calculated by the following equation.

$$PC = EC + TC,$$

Here, PC stands for "prime cost", EC stands for "exchange SCFG capacity", and TC stands for "total capacity of exchange target LMA area".

Real cost is calculated using the prime cost by the following equation.

$$RC = PC \times MC \,\hat{}\, WT,$$

Here, RC stands for "real cost", PC stands for "prime cost", MC stands for "cost mitigation coefficient", and WT stands for "number of times in waiting for task execution". The symbol of operation "x" means multiplication and the symbol of operation "^" means exponentiation. The decision of a task switching target is performed based on "real cost".

"Prime cost" is a cost used as the base in the task switching. It is calculated by the sum of "exchange SCFG capacity" and "total capacity of exchange target LMA area".

"Exchange SCFG capacity" is a capacity of SCFG used as an exchange target. For example, in the case of switching from TSK1 to TSK2 in Fig. 5, this value is zero (EC=0) because the same SCFG1 is used. In the case of switching from TSK1 to TSK3, the value is the capacity of SCFG2. SCFG which a task uses is identified with reference to CFGID of the task management information shown in Fig. 6. As a concrete capacity value, for example, the capacity value of the section configuration to be used may be employed for cost calculation.

"Total capacity of exchange target LMA area" is a capacity of the LMA area used as an exchange target. The value of "total capacity of exchange target LMA area" is calculated only from an area really necessary to be exchanged. Which task uses which area is decided from the local memory management information shown in Fig. 7. The value of "total capacity of exchange target LMA area" is calculated based on the following assumption: that is, in the case of task switching, for example, from TSK1 to TSK2, if the area of LMA does not overlap in TSK1 and TSK2, the data saving of TSK1 is not performed, and the data which is not on LMA among the LMA area which TSK2 uses is assumed to be loaded. As explained for the data information LMINFO of the local memory LMA shown in Fig. 7, the area for which saving or loading of data is not necessary is excluded from the value of "total capacity of exchange target LMA area". For example, the value of "total capacity of exchange target LMA area" is calculated from the capacity of one area, and the number of area for which saving and loading is performed.

"Real cost" is a value for deciding a task switching target. The value is calculated by the previously-described "prime cost" coupled with the element of the "number of times in waiting for task execution". More specifically, the value is calculated by "cost mitigation coefficient" raised to the power of "a number of times in waiting for task execution" and then multiplied by "prime cost". The reason for adopting such calculation is because only the same task may be executed if the decision is made only by "prime cost". According to the above calculation, when "cost mitigation coefficient" is set to zero (MC=0), if "number of times in waiting for task execution" is zero (WT=0), then "real cost" becomes one (RC=1) ; and if the "number of times in waiting for task execution" is one or more (WT>0), then "real cost" becomes always zero (RC=0) . This is a value for executing preferentially a task which has not been chosen even once by the task switching decision. If "cost mitigation coefficient" is set to one (MC=1), "real cost" is always equal to "prime cost" (RC=PC), and "number of times in waiting for task execution" is not evaluated. If the value of "cost mitigation coefficient" is set greater than zero and smaller than one (0<MC<1), "real cost" will become small according to "number of times in waiting for task execution". Therefore, if the number of times of waiting increases, the task concerned becomes easy to be executed.

By calculating cost in this way, the time accompanying task switching is taken into consideration sufficiently, and the frequency where a task is chosen can be adjusted according to the purpose.

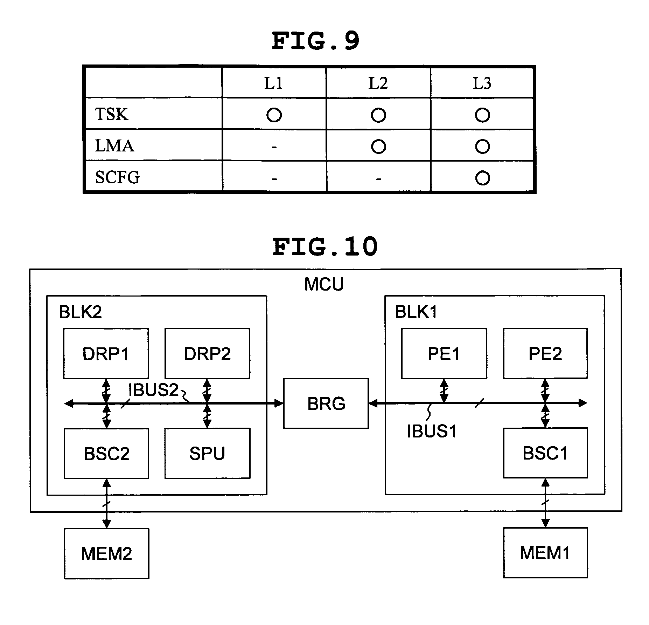

The second cost calculation method decides cost according to a table shown in Fig. 9. Since the detailed amount of data transfer accompanying a task switching is not calculated, it is easy to predict operation and simple to calculate cost, compared with the first cost calculation method. However, cautions are required for the point that the amount of data transfer accompanying task switching does not necessarily become the minimum in this method. The second cost calculation method is explained using Fig. 9.

Fig. 9 shows an evaluation table illustrating the cost hierarchy used with the second cost calculation method for a task switching decision. In Fig. 9, the vertical axis shows objects of cost judgment such as a task TSK, a local memory LMA, and a section configuration SCFG which are the exchange target in task switching, and the horizontal axis shows cost judgment layers L1, L2, and L3. The exchange target in the cost judgment layer L1 is the task TSK. The exchange targets in the cost judgment layer L2 are the task TSK and the local memory LMA. In a case where a task is suspended during execution and another task is executed, this exchange takes place in the following situations, that is, a case where the areas of local memory LMA used by the tasks before and after the task switching overlap, and a case where the area of local memory LMA used by the task to be newly executed is not loaded. Exchange of the local memory LMA is needed for saving the intermediate data during the operation, for saving and storing the result of the operation, or for setting up the data to be used by the next task. Saving the result of the previous task and setting the input data of a new task are also the exchange target, not only when executing a different task after suspending a task, but when a new task is executed after the end of the previous task. There is a case where not only exchange (storing and loading) but a mere loading is required. The exchange targets in the cost judgment layer L3 are the task TSK, the local memory LMA, and the section configuration SCFG. It is judged that the Layer L1 is the smallest in the task switching cost and the layer L3 is the greatest in the task switching cost. The Layer L1 is a case where neither exchange of the area of LMA nor exchange of SCFG is performed at the time of task switching. The layer L2 is a case where exchange of the area of LMA is performed but exchange of SCFG is not performed at the time of task switching. The layer L3 is a case where exchange of the area of LMA and exchange of the SCFG are performed at the time of task switching.

Although the example of Fig. 9 adopts the layer composition as shown in the figure, this evaluation table can be changed by employing the capacity of the configuration buffer CFGBUF and the capacity of the local memory LMA and others, thereby supporting various dynamically reconfigurable processors.

As explained above, by using a microcomputer MCU which adopts the constitution of the present invention, the cost (i.e., the overhead) due to task switching in the total processing can be reduced, for one chip which has on-chip processors PE1, PE2, a sub-processor SPU, and dynamically reconfigurable processors DRP1, DRP2; and the total processing performance can be enhanced.

Another example of a microcomputer MCU is shown in Fig. 10. The microcomputer MCU shown in Fig. 10 is different from the counterpart shown in Fig. 1 in the point where a bridge circuit BRG couples a circuit block BLK1 and a circuit block BLK2. The circuit block BLK1 possesses processors PE1, PE2. The circuit block BLK2 possesses dynamically reconfigurable processors DRP1, DRP2 and a sub-processor SPU. Bus state controllers BSC1, BSC2 are separately provided, and to each of them, external memories EXMEM1, EXMEM2 are individually coupled. According to the constitution of Fig. 10, the data which flows through the bus IBUS1, IBUS2 in each circuit block BLK1, BLK2 does not interfere with each other, therefore, there is an advantage that the microcomputer can execute processing more smoothly. When deciding the cost in the task switching, it is also possible to calculate the cost more accurately by enlarging the cost of memory access across the bridge circuit BRG.

In the above, the invention made by the present inventor was explained concretely. However, it cannot be overemphasized that the present invention is not limited to it, but the present invention can be modified or altered variously in the range which does not deviate from the gist. For example, the number of dynamically reconfigurable processors DRP1, DRP2 and processors PE1, PE2 is not limited to two pieces, but can be appropriately changed to a single piece or plural pieces. The external memory EXMEM may be mounted on chip of the microcomputer MCU.

The first processor is not limited to a data-flow type dynamically reconfigurable processor; however, it may be a processor which performs data processing according to the instruction or command which are set up. In this case, the local memory serves as a command buffer and a data memory.

The above explanation has mainly explained the case where the invention made by the present inventor is applied to the microcomputer which is the application field used as the background. However, the present invention is not limited to it but can be applied to various integrated circuits. The present invention can be applied to various integrated circuits, at least, on condition that plural processors are included therein.

**Claims**

1. A data processing system comprising:

   a first processor of which a logical function is controlled variably; and
   a second processor operable to control assignment of a task to the first processor,

   wherein the first processor includes:

   a buffer memory operable to store logical configuration information received from the second processor;
   an arithmetic circuit of which a logical function is determined upon receiving the logical configuration information stored in the buffer memory;
   a data memory coupled to the arithmetic circuit; and
   a control circuit, upon responding to a direction from the second processor, operable to control internal transfer of the logical configuration information from the buffer memory to the arithmetic circuit and internal transfer of data between the arithmetic circuit and the data memory, and

   wherein, when the first processor switches a task to process, the second processor performs cost calculation to a task as a switching candidate with the same priority, in consideration of amount of a transfer time of the logical configuration information and a data transfer time for switching the logical function, and determines a task to be performed next based on the calculation result.

2. The data processing system according to claim 1, wherein the cost calculation takes the amount of transfer time into consideration in terms of the sum total of exchange capacity of the buffer memory and exchange capacity of the data memory.

3. The data processing system according to claim 1, wherein the cost calculation takes the amount of transfer time into consideration in terms of a kind of information to be processed as an exchange target in the buffer memory and the data memory.

4. The data processing system according to claim 1, wherein the second processor possesses a storage area of task management information for managing a task to be processed by the first processor, and wherein the task management information includes, for every task, task identification information, identification information of the first processor assigned to process the task concerned, and a task execution priority of the task concerned.

5. The data processing system according to claim 4, wherein the second processor possesses a storage area of area management information for managing the data memory by dividing the data memory into a plurality of areas, and wherein the area management information includes, for every area which a task managed by the task management information uses, task identification information, identification information of one area which the task concerned uses, data saving address information, information indicative of the location of data assigned to the area indicated by the identification information, and information indicative of a utilization object of the area indicated by the identification information.

6. The data processing system according to claim 5, wherein the second processor excludes an area specified by the area management information concerned from the object of the cost calculation, in case that when switching a task, the information indicative of the location included in the area management information of the task to be performed next means the data memory.

7. The data processing system according to claim 6, wherein the information indicative of the location means one of the data memory and a saving place outside the first processor, and wherein, when the information indicative of the location indicates the saving place, an area specified by the area management information including the information indicative of the location concerned is set as the object of the cost calculation.

8. The data processing system according to claim 5, wherein, in case that when switching a task, the information indicative of the utilization object included in the area management information of the task indicates that the exchange of data is required, the second processor sets an area specified by the area management information concerned as the object of the cost calculation.

9. The data processing system according to claim 8, wherein the information indicative of the utilization object indicates one of an output data buffer, an input data buffer, a constant data storing area, and an area which stores an intermediate result of processing by a task,
wherein, in case that the information indicative of the utilization object indicates the output data buffer when switching a task at the end of a task, the second processor saves information on an area specified by the area management information of the task concerned, and
wherein, in case that the information indicative of the utilization object indicates the area which stores the intermediate result when switching a task at processing interruption of the task, the second processor saves information on an area specified by the area management information of the task concerned.

10. The data processing system according to claim 1, further comprising:

a plurality of the first processors;
a plurality of third processors operable to issue a data processing request to the second processor; and
an external memory,

wherein the second processor controls assignment of a task to the first processors in response to the data processing request issued by the third processors, and performs an access control for data transfer between the buffer memory and the data memory and data transfer between the buffer memory and the external memory.

11. A semiconductor integrated circuit comprising, over one semiconductor substrate:

a plurality of first processors of which a logical function is operable to be controlled variably;
a second processor operable to control the first processors; and
a plurality of third processors operable to issue a data processing request to the second processor,
wherein the first processor includes;
a buffer memory operable to store logical configuration information received from the second processor;
an arithmetic circuit of which a logical function is determined, upon receiving the logical configuration information stored in the buffer memory;
a data memory coupled to the arithmetic circuit; and
a control circuit, in response to a direction from the second processor, operable to control internal transfer of the logical configuration information from the buffer memory to the arithmetic circuit and internal transfer of data between the arithmetic circuit and the data memory,

wherein the second processor controls assignment of a task to the first processor in response to the data processing request issued by the third processor, and
wherein, when the first processor switches a task to process, the second processor performs cost calculation in consideration of amount of a transfer time of the logical configuration information and a data transfer time for switching the logical function to a task as a switching candidate with the same priority, and determines a task to be performed next based on the calculation result.

12. The semiconductor integrated circuit according to claim 11,
wherein the first processors, the second processor, and the third processors are commonly coupled to an internal bus.

13. The semiconductor integrated circuit according to claim 11,
wherein the first processors and the second processor are commonly coupled to a first internal bus, and the third processors are commonly coupled to a second internal bus, and
wherein the semiconductor integrated circuit further includes a bridge circuit operable to couple the first internal bus and the second internal bus.

14. A data processing system comprising;
a first processor; and
a second processor operable to control assignment of a task to the first processor,
wherein the first processor includes:

an arithmetic circuit;
a local memory operable to store information received from the second processor and an operation result by the arithmetic circuit; and
a control circuit operable to control internal transfer of information between the local memory and the arithmetic circuit in response to a direction from the second processor, and

wherein, when the first processor switches a task to process, the second processor performs cost calculation in consideration of amount of required transfer time of the information to a task as a switching candidate with the same priority, and determines a task to be performed next based on the calculation result.

15. The data processing system according to claim 14, wherein the cost calculation takes into consideration the amount of the transfer time in terms of exchange capacity of the buffer memory,

16. The data processing system according to claim 14, wherein the cost calculation takes into consideration the amount of the transfer time in terms of a kind of information as an exchange target to the buffer memory.

## FIG.1

MCU

| SPU | PE2 | PE1 |

IBUS

| DRP2 | DRP1 | BSC | ← → | EXMEM |

## FIG.2

DRP1

| RCA | LMA | BUSIF |

IBUS

CFGM

CFGBUF

## FIG.3

1ST_CFGH(EXMEM)

2nd_ CFGH(CFGBUF)

DRP

3rd_CFGH(CFGLC)

# FIG.4

ARW

# FIG.5

## FIG.6

| TID | CFGID | TGTDRP | TSKPRI | STPT | ENDPT | SPDPT |
|---|---|---|---|---|---|---|

TMF

## FIG.7

| TID | AID | BUFADR | LMST | LMDINFO |
|---|---|---|---|---|

LMMF

## FIG.8

Ready task is generated — S1

DRP is available? — S2 → No

Yes

Is waiting task one? — S3 → Yes → Select the waiting task — S4

No

Is the first priority task one? — S5 → Yes → Select the first priority task — S6

No

Calculate task –switching cost — S7

Select the task of the lowest task-switching cost — S8

# FIG.9

|      | L1 | L2 | L3 |
|------|----|----|----|
| TSK  | O  | O  | O  |
| LMA  | -  | O  | O  |
| SCFG | -  | -  | O  |

# FIG.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006338887 A
- JP 2004171234 A